Europäisches Patentamt

European Patent Office

Office européen des brevets

(11) Veröffentlichungsnummer: **0 290 807 B1**

## (12) EUROPÄISCHE PATENTSCHRIFT

(45) Veröffentlichungstag der Patentschrift: **04.03.92**

(21) Anmeldenummer: **88105965.3**

(22) Anmeldetag: **14.04.88**

(51) Int. Cl.⁵: **C08F 220/04**, C08F 222/02, A01C 1/06, A01N 25/26, //(C08F220/04,222:02,220:28, 246:00),(C08F222/02,220:04, 220:28,246:00)

54 **Wasserlösliche Copolymerisate, Verfahren zu deren Herstellung und Verwendung.**

(30) Priorität: **21.04.87 DE 3713347**

(43) Veröffentlichungstag der Anmeldung:
**17.11.88 Patentblatt 88/46**

(45) Bekanntmachung des Hinweises auf die Patenterteilung:
**04.03.92 Patentblatt 92/10**

(84) Benannte Vertragsstaaten:
**AT BE CH DE ES FR GB IT LI NL SE**

(56) Entgegenhaltungen:
**DE-A- 3 233 776**
**DE-A- 3 302 496**
**FR-A- 2 595 706**
**US-A- 4 555 557**
**US-A- 4 710 537**

(73) Patentinhaber: **BASF Aktiengesellschaft
Carl-Bosch-Strasse 38
W-6700 Ludwigshafen(DE)**

(72) Erfinder: **Seelmann-Eggebert, Hans-Peter, Dr.
Friedrichstrasse 8
W-6905 Schriesheim(DE)**
Erfinder: **Boeckh, Dieter, Dr.
Trifelsring 63
W-6703 Limburgerhof(DE)**
Erfinder: **Hartmann, Heinrich, Dr.
Weinheimer Strasse 46
W-6703 Limburgerhof(DE)**
Erfinder: **Trieselt, Wolfgang, Dr.
Alwin-Mittasch-Platz 1
W-6700 Ludwigshafen(DE)**
Erfinder: **Kud, Alexander, Dr.
Am Hellbrunn 57
W-6509 Eppelsheim(DE)**

EP 0 290 807 B1

**Beschreibung**

Aus der WO-Anmeldung 85/01736 ist bekannt, Saatgut mit einer Polymerisatmischung zu beschichten, die hygroskopisch ist. Die Mischung besteht aus feinteiligen vernetzten Polyacrylamiden und feinteiligen vernetzten Polyacrylaten. Diese Mischungen können gegebenenfalls noch Graphit enthalten. Das damit beschichtete Saatgut keimt schneller als unbehandeltes. Nachteilig ist jedoch, daß die hochmolekularen, vernetzten Polymerisate biologisch praktisch nicht abbaubar sind.

Der vorliegenden Erfindung liegt die Aufgabe zugrunde, weitgehend biologisch abbaubare Beschichtungsmittel für Saatgut zur Verfügung zu stellen.

Die Aufgabe wird erfindungsgemäß gelöst mit wasserlöslichen Copolymerisaten auf Basis von monoethylenisch ungesättigten Carbonsäuren mit 3 bis 6 C-Atomen, wenn die Copolymerisate einen K-Wert von 8 bis 100, vorzugsweise 15 bis 80 (bestimmt am Natriumsalz nach H. Fikentscher in wäßriger Lösung bei 25°C, einem pH-Wert von 7 und einer Polymerkonzentration des Na-Salzes von 1 Gew.%) haben und
a) 99 bis 15 Mol% wenigstens einer monoethylenisch ungesättigten $C_3$- bis $C_6$-Monocarbonsäure,
b) 0,5 bis 84,5 Mol% wenigstens einer monoethylenisch ungesättigten $C_4$- bis $C_6$-Dicarbonsäure,
c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,
d) 0 bis 30 Mol% anderen, mit a), b) und c) copolymerisierbaren, wasserlöslichen, monoethylenisch ungesättigten Monomeren und
e) 0,5 bis 15 Mol% wenigstens eines mindestens zwei ethylenisch ungesättigte, nicht konjugierte Doppelbindungen aufweisenden Comonomeren, das sich von Estern ableitet, die erhältlich sind durch Veresterung von
e1) monoethylenisch ungesättigten $C_3$- bis $C_6$-Monocarbonsäuren mit
e2) mehrwertigen, 2 bis 6 C-Atomen aufweisenden Alkoholen, wasserlöslichen oder wasserunlöslichen Polyalkylenglykolen eines Molekulargewichtes bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000 und einwertigen, monoethylenisch ungesättigten $C_3$- bis $C_6$-Alkoholen

mit der Maßgabe einpolymerisiert enthalten, daß die Summe der Angaben in Mol% a) bis e) immer 100 beträgt und daß die über Einheiten von e) miteinander verknüpften Polymersegmente aus Einheiten der Monomeren a) und b) sowie gegebenenfalls c) und d) Polymersegmente mit einem Molekulargewicht (Gewichtsmittel) von höchstens 15.000, vorzugsweise höchstens 10.000 darstellen.

Die wasserlöslichen Copolymerisate enthalten vorzugsweise Polymersegmente aus Einheiten der Monomeren a) und b) sowie gegebenenfalls c) und d) mit einem Molekulargewicht (Gewichtsmittel) von etwa 300 bis 8.000. Diese Polymersegmente sind über Einheiten der Monomeren e) miteinander verknüpft.

Die wasserlöslichen Copolymerisate werden hergestellt durch Copolymerisieren von Monomerengemischen aus
a) 99 bis 15 Mol% wenigstens einer monoethylenisch ungesättigten $C_3$- bis $C_6$-Monocarbonsäure,
b) 0,5 bis 84,5 Mol% wenigstens einer monoethylenisch ungesättigten $C_4$- bis $C_6$-Dicarbonsäure,
c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren und
d) 0 bis 30 Mol% anderen, mit a), b) und c) copolymerisierbaren, wasserlöslichen, monoethylenisch ungesättigten Monomeren
in wäßriger Lösung in Gegenwart von Polymerisationsinitiatoren, mit der Maßgabe, daß die Copolymerisation in Anwesenheit von
e) 0,5 bis 15 Mol% wenigstens eines mindestens zwei ethylenisch ungesättigte, nicht konjugierte Doppelbindungen aufweisenden Comonomeren, das sich von Estern ableitet, die erhältlich sind durch Veresterung von
e1) monoethylenisch ungesättigten $C_3$- bis $C_6$-Monocarbonsäuren mit
e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000 und einwertigen, monoethylenisch ungesättigten $C_3$- bis $C_6$-Alkoholen mit der Maßgabe durchgeführt wird, daß die Summe der Angaben in Mol.% a) bis e) immer 100 beträgt und daß dabei noch zusätzlich Polymerisationsregler in einer Menge von 0,2 bis 25 Gew.%, bezogen auf die Monomeren a) bis e), eingesetzt werden, wobei auf den Einsatz von Polymerisationsreglern verzichtet werden kann, wenn die Menge an Polymerisationsinitiatoren 4 Gew.%, bezogen auf die Monomeren a) bis e), übersteigt.

2

Als Komponente a) der wasserlöslichen Copolymerisate kommen monoethylenisch ungesättigte $C_3$- bis $C_6$-Monocarbonsäuren in Betracht. Geeignete Carbonsäuren dieser Art sind beispielsweise Acrylsäure, Methacrylsäure, Ethacrylsäure, Vinylessigsäure, Allylessigsäure und Crotonsäure. Vorzugsweise verwendet man als Monomer der Komponente a) Acrylsäure und/oder Methacrylsäure. Die Monomeren der Komponente a) sind zu 99 bis 15, vorzugsweise 90 bis 20 Mol% am Aufbau des Copolymerisats beteiligt.

Als Monomer der Komponente b) werden monoethylenisch ungesättigte $C_4$-bis $C_6$-Dicarbonsäuren eingesetzt. Hierbei handelt es sich beispielsweise um Maleinsäure, Itaconsäure, Citraconsäure, Mesaconsäure, Fumarsäure und Methylenmalonsäure. Vorzugsweise kommen Maleinsäure oder Itaconsäure als Monomer b) zur Anwendung. Die Monomeren b) sind zu 0,5 bis 84,5, vorzugsweise 5 bis 60 Mol% am Aufbau der Copolymerisate beteiligt.

Die Copolymerisate können gegebenenfalls Hydroxyalkylester mit 2 bis 6 C-Atomen in der Hydroxyalkylgruppe von monoethylenisch ungesättigten $C_3$- bis $C_6$-Carbonsäuren als Komponente c) einpolymerisiert enthalten. Die Hydroxyalkylestergruppen dieser Gruppe von Monomeren leiten sich von mehrwertigen Alkoholen ab, z.B. Glykol, Glycerin, Propandiol-1,2, Propandiol-1,3, Butandiol-1,4, Butandiol-1,3, Butandiol-2,3, Gemische der Butandiole oder Propandiole, Hexandiol-1,6 und Neopentylglykol. Die mehrwertigen Alkohole werden mit monoethylenisch ungesättigten $C_3$- bis $C_6$-Carbonsäuren verestert. Hierbei handelt es sich um diejenigen Carbonsäuren, die oben unter a) und b) genannt sind. Als Komponente c) eignen sich somit beispielsweise Hydroxyethylacrylat, Hydroxyethylmethacrylat, Hydroxy-n-propylmethacrylat, Hydroxy-n-propylacrylat, Hydroxyisopropylacrylat, Hydroxyisopropylmethacrylat, Hydroxy-n-butylacrylat, Hydroxyisobutylacrylat, Hydroxy-n-butylmethacrylat, Hydroxyisobutylmethacrylat, Hydroxyethylmonomaleinat, Hydroxyethyldimaleinat, Hydroxypropylmonomaleinat, Hydroxypropyldimaleinat, Hydroxy-n-butylmonomaleinat, Hydroxy-n-butyldimaleinat und Hydroxyethylmonoitaconat. Von den Hydroxyalkylestern der monoethylenisch ungesättigten Dicarbonsäuren kommen sowohl die Mono- als auch die Diester der Dicarbonsäuren mit den oben genannten mehrwertigen Alkoholen in Betracht.

Vorzugsweise verwendet man als Komponente c) Hydroxyethylacrylat, Hydroxyethylmethacrylat, Butan-1,4-diolmonoacrylat und die technischen Gemische von Hyroxypropylacrylaten. Hierbei sind von besonderer technischer Bedeutung die Isomerengemische aus 2-Hydroxy-1-propylacrylat und 1-Hydroxy-2-propylacrylat. Diese Hydroxyalkylacrylate werden durch Umsetzung von Acrylsäure mit Propylenoxid hergestellt. Die Monomeren der Gruppe c) sind zu 0 bis 20, vorzugsweise 0 bis 15 Mol% in polymerisierter Form im Copolymerisat enthalten.

Die Copolymerisate können gegebenenfalls als Komponente d) andere, mit a), b) und c) copolymerisierbare, wasserlösliche monoethylenisch ungesättigte Monomere enthalten. Geeignete Monomere dieser Art sind beispielsweise Acrylamid, Methacrylamid, 2-Acrylamido-2-methylpropansulfonsäure, Vinylsulfonsäure, Allylsulfonsäure, Vinylphosphonsäure, Allylphosphonsäure, Acrylnitril, Methacrylnitril, Dimethylaminoethylacryat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin, Vinylacetat sowie Mischungen der genannten Monomeren. Diejenigen Monomeren dieser Gruppe, die Säuregruppen enthalten, können bei der Copolymerisation in Form der freien Säuregruppen oder auch in partiell oder vollständig mit Alkalimetallbasen oder Ammoniumbasen neutralisierter Form eingesetzt werden. Die basischen Acrylate, wie Diethylaminoethylacrylat, werden mit Säuren neutralisiert bzw. quaternisiert und dann der Copolymerisation unterworfen. Die Monomeren d) sind zu 0 bis 30, vorzugsweise 0 bis 20 Mol% am Aufbau der Copolymerisate beteiligt. Sie dienen lediglich zur Modifizierung der Copolymerisate.

Wesentlicher Bestandteil der Copolymerisate sind dagegen die Monomere der Komponente e). Hierbei handelt es sich um Comonomere, die mindestens zwei ethylenisch ungesättigte, nicht konjugierte Doppelbindungen aufweisen und mindestens eine Estergruppe enthalten. Diese Comonomeren bewirken eine Erhöhung des Molekulargewichts der Copolymerisate und sind zu 0,5 bis 15 Mol% am Aufbau der Copolymerisate beteiligt. Besonders bewährt haben sich Copolymerisate, die mindestens 1, vorzugsweise mindestens 1,5 Mol.% Monomere der Komponente e) einpolymerisiert enthalten. Als obere Grenze an Monomeren e) haben sich 12, vorzugsweise 8 Mol.%, als besonders vorteilhaft erwiesen.

Die Comonomeren e) sind erhältlich durch Umsetzung von

e1) monoethylenisch ungesättigten $C_3$- bis $C_6$-Monocarbonsäuren bzw. deren esterbildenden Derivaten, wie Anhydriden, Säurehalogeniden oder Säureestern oder deren Mischungen, vorzugsweise Acrylsäure, Methacrylsäure, Crotonsäure, Vinylessigsäure, Methacrylsäureanhydrid oder deren Gemischen mit

e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000, Allylalkohol, Buten-2-diol-1,4 oder deren Mischungen.

Mehrwertige, 2 bis 6 C-Atome aufweisende Alkohole sind beispielsweise Glykol, Glycerin, Pentaerythrit

3

und Monosaccharide, wie Glucose, Mannose, Galactose, Uronsäuren wie Galacturonsäure und Zuckersäuren, wie Schleimsäure oder Galactonsäure.

Unter wasserlöslichen Polyalkylenglykolen sollen die Anlagerungsprodukte von Ethylenoxid, Propylenoxid, n-Butylenoxid und Isobutylenoxid oder deren Gemischen an mehrwertige, 2 bis 6 Kohlenstoffatome aufweisende Alkohole verstanden werden, z.B. die Anlagerungsprodukte von Ethylenoxid an Glykol, Anlagerungsprodukte von Ethylenoxid an Glycerin, Anlagerungsprodukte von Ethylenoxid an Pentaerythrit, Anlagerungsprodukte von Ethylenoxid an Monosaccharide, sowie die Anlagerungsprodukte von Mischungen der genannten Alkylenoxide an mehrwertige Alkohole. Bei diesen Anlagerungsprodukten kann es sich um Blockcopolymerisate von Ethylenoxid und Propylenoxid, von Ethylenoxid und Butylenoxiden oder von Ethylenoxid, Propylenoxid und Butylenoxiden handeln. Außer den Blockcopolymerisaten kommen solche Anlagerungsprodukte in Betracht, die die genannten Alkylenoxide in statistischer Verteilung einpolymerisiert enthalten.

Das Molekulargewicht der Polyalkylenglykole beträgt zweckmäßigerweise bis zu 5.000, vorzugsweise bis 2.000. Von den wasserlöslichen Polyalkylenglykolen verwendet man vorzugsweise Diethylenglykol, Triethylenglykol, Tetraethylenglykol und Polyethylenglykol eines Molekulargewichts von bis zu 1.500.

Als Komponente e2) kommen außerdem Polyglycerine eines Molekulargewichts bis 2.000 in Betracht. Vorzugsweise verwendet man von dieser Stoffklasse Diglycerin, Triglycerin und Tetraglycerin. Außerdem kommen Polyvinylalkohole eines Molekulargewichts bis 10.000, vorzugsweise Polyvinylalkohole mit einem Molekulargewicht bis zu 2.000 in Betracht. Bei den Polyvinylalkoholen, die durch Hydrolyse aus Polyvinylacetat hergestellt werden, kann es sich um vollständig oder teilweise hydrolysierte Polyvinylacetate handeln. Weitere geeignete Verbindungen der Komponente e2) sind einwertige, monoethylenisch ungesättigte $C_3$- bis $C_6$-Alkohole, wie Allylalkohol, sowie Buten-2-diol-1,4.

Vorzugsweise werden Comonomere e) aus Acrylsäure, Methacrylsäure oder deren Mischungen und Ethylenglykol, Polyethylenglykol eines Molekulargewichts bis 2.000, Glycerin, Diglycerin, Triglycerin, Tetraglycerin, sowie Polyglycerinen eines Molekulargewichts bis 2.000, Pentaerythrit, Monosacchariden und/oder $\alpha,\omega$-Diolen mit 3 bis 6 C-Atomen verwendet. Diese Monomeren enthalten mindestens 2 ethylenisch ungesättigte Doppelbindungen.

Die wasserlöslichen Copolymerisate werden durch Copolymerisieren von Monomerengemischen aus

a) 99 bis 15 Mol% wenigstens einer monoethylenisch ungesättigten $C_3$- bis $C_6$-Monocarbonsäure,

b) 0,5 bis 84,5 Mol% wenigstens einer monoethylenisch ungesättigten $C_4$- bis $C_6$-Dicarbonsäure,

c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren, und

d) 0 bis 30 Mol% anderen, mit a), b) und c) copolymerisierbaren, wasserlöslichen, monoethylenisch ungesättigten Monomeren in wäßriger Lösung in Gegenwart von Polymerisationsinitiatoren und gemäß Erfindung zusätzlich in Gegenwart von

e) 0,5 bis 15 Mol% wenigstens eines mindestens zwei ethylenisch ungesättigte, nicht konjugierte Doppelbindungen aufweisenden Comonomeren, das sich von Estern ableitet, die erhältlich sind durch Veresterung von

e1) monoethylenisch ungesättigten $C_3$- bis $C_6$-Monocarbonsäuren mit

e2) mehrwertigen, 2 bis 6 C-Atomen aufweisenden Alkoholen, wasserlöslichen oder wasserunlöslichen Polyalkylenglykolen eines Molekulargewichtes bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000 und einwertigen, monoethylenisch ungesättigten $C_3$- bis $C_6$-Alkoholen

mit der Maßgabe hergestellt, daß die Summe der Angaben in Mol.% a) bis e) immer 100 beträgt und daß dabei noch zusätzlich Polymerisationsregler in einer Menge von 0,2 bis 25 Gew.%, bezogen auf die Monomeren a) bis e), eingesetzt werden, wobei auf den Einsatz von Polymerisationsreglern verzichtet werden kann, wenn die Menge an Polymerisationsinitiatoren 4 Gew.%, bezogen auf die Monomeren a) bis e), übersteigt.

Die Summe der Angaben in Mol% der Komponenten a) bis e) beträgt immer 100. Die Copolymerisation wird in wäßrigem Medium, vorzugsweise in rein wäßrigem Medium, durchgeführt. Sie kann nach verschiedenen Verfahrensvarianten erfolgen, z.B. kann man die Monomeren a) bis e) in Form wäßriger Lösungen diskontinuierlich in einer Batch-Fahrweise polymerisieren. Außerdem ist es möglich, zunächst einen Teil der Monomeren und einen Teil des Initiators sowie gegebenenfalls den Regler im Polymerisationsreaktor vorzulegen, unter Inertgasatmosphäre auf die Polymerisationstemperatur zu erwärmen und dann die übrigen Monomeren und den Initiator sowie gegebenenfalls weitere Mengen an Regler oder auch die Gesamtmenge an Regler nach Fortschritt der Polymerisation dem Reaktor zuzugeben. Die Polymerisationstemperaturen liegen im Bereich von 20 bis 200° C. Bei Temperaturen oberhalb von 100° C arbeitet man in Druckapparaturen. Vorzugsweise beträgt die Polymerisationstemperatur 50 bis 150 °C.

In einer bevorzugten Ausführungsform des Herstellverfahrens wird zunächst das Comonomer e) hergestellt, indem man

e1) Acrylsäure, Methacrylsäure, Crotonsäure, Vinylessigsäure, Methacrylsäureanhydrid oder deren Gemische in einem Reaktor vorlegt und darin mit

e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000, Allylalkohol, Butan-2-diol-1,4 oder deren Mischungen

bei Temperaturen von 50 bis 200 °C umsetzt. Diese Umsetzung wird vorzugsweise in Abwesenheit von Wasser vorgenommen, geringe Mengen an Wasser stören dabei nicht. Anstelle von den unter e1) genannten Verbindungen kann man jedoch auch die sich davon ableitenden Ester mit $C_1$- bis $C_4$-Alkoholen einsetzen. In diesen Fällen wird eine Umesterung durchgeführt und vorzugsweise der dabei entstehende $C_1$- bis $C_4$-Alkohol aus dem Reaktionsgemisch abdestilliert. Falls bei der Herstellung der Comonomeren e) Ester der Komponente e1) eingesetzt werden, so sind dies vorzugsweise Acrylsäuremethylester, Methacrylsäuremethylester, Crotonsäuremethylester, Acrylsäureisopropylester und Methacrylsäureisopropylester. Gegebenenfalls können übliche Umesterungskatalysatoren mitverwendet werden.

Pro Mol der Verbindungen e2) - sofern es sich um mehrwertige Alkohole handelt - setzt man mindestens 1 Mol, vorzugsweise mindestens 2 Mol, einer Verbindung der Komponente e1) ein. Die Temperatur bei der Umsetzung beträgt vorzugsweise 50 bis 150 °C. Die Reaktion wird soweit geführt, daß praktisch ein quantitativer Umsatz der Komponente e2) gegeben ist. Die üblicherweise in einem Überschuß verwendete Komponente e1) kann nach Beendigung der Comonomerherstellung im Reaktionsgemisch verbleiben. Das Comonomer kann in diesem Fall in einer monoethylenisch ungesättigten $C_3$- bis $C_6$-Monocarbonsäure gemäß a) oder einer gegebenenfalls teilweise oder vollständig neutralisierten wäßrigen Lösung derselben gelöst werden und dann zusammen mit dem nicht umgesetzten Teil der Komponente e1) und den übrigen Monomeren der Copolymerisation unterworfen werden.

Die Copolymerisation der Monomeren a) bis e) wird bei einem pH-Wert der wäßrigen Lösung von 2 bis 9, vorzugsweise von 3 bis 7 durchgeführt. Die Monomeren a) und b), die jeweils Carbonsäuregruppen enthalten, können in Form der freien Carbonsäuren oder in neutralisierter, vorzugsweise in partiell neutralisierter Form copolymerisiert werden, wobei der Neutralisationsgrad 0 bis 100, vorzugsweise 40 bis 90 Mol% beträgt. Die Neutralisation erfolgt vorzugsweise mit Alkalimetall- oder Ammoniumbasen. Hierunter sind beispielsweise Natronlauge, Kalilauge, Soda, Pottasche oder Ammoniumbasen wie Ammoniak, $C_1$- bis $C_{18}$-Alkylamine, Dialkylamine, wie Dimethylamin, Di-n-butylamin, Dihexylamin, tertiäre Amine wie Trimethylamin, Triethylamin, Tributylamin, Triethanolamin sowie quaternisierte Stickstoffbasen, z.B. Tetramethylammoniumhydroxid, Trimethyllaurylammoniumhydroxid und Trimethylbenzylammoniumhydroxid zu verstehen. Vorzugsweise verwendet man zum Neutralisieren Natronlauge, Kalilauge oder Ammoniak. Die Neutralisation kann jedoch auch mit Erdalkalimetallbasen, z.B. Ca-Hydroxid oder $MgCO_3$, vorgenommen werden.

Als Polymerisationsinitiatoren werden vorzugsweise wasserlösliche radikalbildende Verbindungen eingesetzt, z.B. Wasserstoffperoxid, Peroxidisulfate und Mischungen aus Wasserstoffperoxid und Peroxidisulfaten. Geeignete Peroxidisulfate sind beispielsweise Lithium-, Natrium-, Kalium- und Ammoniumperoxidisulfat. Bei Mischungen aus Wasserstoffperoxid und Peroxidisulfat kann jedes beliebige Verhältnis eingestellt werden, vorzugsweise verwendet man Wasserstoffperoxid und Peroxidisulfat im Gewichtsverhältnis 3:1 bis 1:3. Mischungen aus Wasserstoffperoxid und Natriumperoxidisulfat werden vorzugsweise im Gewichtsverhältnis von 1:1 angewendet. Die oben genannten wasserlöslichen Polymerisationsinitiatoren können gegebenenfalls auch in Kombination mit Reduktionsmitteln, z.B. Eisen-II-sulfat, Natriumsulfit, Natriumhydrogensulfit, Natriumdithionit, Triethanolamin und Ascorbinsäure in Form der sogenannten Redox-Initiatoren verwendet werden. Geeignete wasserlösliche organische Peroxide sind beispielsweise Acetylacetonperoxid, Methylethylketonperoxid, tert.-Butylhydroperoxid und Cumolhydroperoxid. Auch die wasserlöslichen organischen Peroxide können mit den oben genannten Reduktionsmitteln eingesetzt werden. Weitere wasserlösliche Polymerisationsinitiatoren sind Azostarter, z.B. 2,2'-Azobis(2-amidinopropan)dihydrochlorid, 2,2'-Azobis-(N,N'-dimethylen)isobutyramidin-dihydrochlorid, 2-(Carbamoylazo)isobutyronitril und 4,4'-Azobis-(4-cyanovaleriansäure). Man kann die Polymerisation auch mit wasserunlöslichen Initiatoren, wie Dibenzoylperoxid, Dicyclohexylperoxidicarbonat, Dilaurylperoxid oder Azodiisobutyronitril, starten.

Die Initiatoren werden in Mengen von 0,1 bis 10, vorzugsweise 2 bis 7 Gew.%, bezogen auf die Summe der bei der Polymerisation eingesetzten Monomeren, angewendet. Die Polymerisationsinitiatoren können entweder zusammen mit den Monomeren oder getrennt davon in Form von wäßrigen Lösungen kontinuierlich oder absatzweise der zu polymerisierenden Mischung zugegeben werden.

Die Copolymerisation kann, insbesondere bei Initiatormengen von bis zu etwa 4 Gew.%, bezogen auf die Monomeren, in Gegenwart von Reglern durchgeführt werden. Hierfür verwendet man vorzugsweise wasserlösliche Verbindungen, die entweder in jedem Verhältnis mit Wasser mischbar sind oder sich zu mehr als 5 Gew.% darin bei einer Temperatur von 20°C lösen. Verbindungen dieser Art sind beispielsweise Aldehyde mit 1 bis 4 Kohlenstoffatomen, wie Formaldehyd, Acetaldehyd, Propionaldehyd, n-Butyraldehyd und Isobutyraldehyd, Ameisensäure, Ammoniumformiat, Hydroxylammoniumsalze, insbesondere Hydroxylammoniumsulfat, SH-Gruppen enthaltende Verbindungen mit bis zu 6 Kohlenstoffatomen, wie Thioglykolsäure, Mercaptoalkohole, wie Mercaptoethanol, Mercaptopropanol, Mercaptobutanole und Mercaptohexanol, ein- und mehrwertige Alkohole mit bis zu 6 C-Atomen, wie Isopropanol, Glykol, Glycerin und Isobutanol. Vorzugsweise in Betracht kommende Regler sind wasserlösliche Mercaptane, z.B. die genannten Mercaptoalkohole, Mercaptocarbonsäuren, Ammoniumformiat und Hydroxylammoniumsulfat. Die Regler werden in Mengen von 0 bis 25 Gew.%, bezogen auf die Summe der bei der Polymerisation eingesetzten Monomeren, verwendet. Auf den Einsatz von Reglern kann in den Fällen verzichtet werden, in denen mehr als etwa 4 Gew.% an Polymerisationsinitiatoren, bezogen auf die Monomeren, oder in denen besonders hohe Anteile an Monomeren b) angewendet werden. Die besonders wirksamen Regler, die vorzugsweise in Betracht kommen, werden in Mengen bis höchstens 15 Gew.% eingesetzt. Sofern in Gegenwart von Reglern gearbeitet wird, beträgt die minimale Einsatzmenge 0,2 Gew.%, bezogen auf die zu polymerisierenden Monomeren.

Nach dem erfindungsgemäßen Verfahren polymerisiert man vorzugsweise Monomerengemische aus

a) 99 bis 15 Mol% Acrylsäure, Methacrylsäure oder deren Mischungen,

b) 0,5 bis 84,5 Mol% Maleinsäure und/oder Itaconsäure und

c) 0 bis 20 Mol% Hydroxypropylacrylaten, Hydroxypropylmethacrylaten, Hydroxyethylacrylat, Hydroxyethylmethacrylat, Hydroxybutylacrylaten, Hydroxybutylmethacrylaten oder deren Mischungen und

e) 0,5 bis 15 Mol% eines Comonomers aus e1) Acrylsäure und/oder Methacrylsäure und e2) Ethylenglykol, Neopentylglykol,Polyethylenglykol eines Molekulargewichts bis 2.000, Glycerin, Polyglycerinen eines Molekulargewichts bis 2.000, Pentaerythrit, Monosacchariden, oder Mischungen aus diesen Verbindungen.

Besonders bevorzugt ist die Herstellung von Copolymerisaten aus

a) Acrylsäure und/oder Methacrylsäure,

b) Maleinsäure und

e) einem der oben genannten Comonomeren e), die bevorzugt zum Einsatz gelangen, d.h. Diacrylaten oder Dimethacrylaten von Ethylenglykol, Neopentylglykol, Polyethylenglykolen eines Molekulargewichts bis zu 1.500, Glycerin und Butandiol-1,4.

Bei der Copolymerisation der Monomeren a) bis e) werden wäßrige Polymerisatlösungen erhalten, die einen Polymerisatgehalt bis zu 70 Gew.% aufweisen. Es ist selbstverständlich auch möglich, stark verdünnte, z.B. 1 %ige wäßrige Lösungen herzustellen, jedoch wird die Copolymerisation aus wirtschaftlichen Erwägungen so geführt, daß man mindestens 20 gew.%ige wäßrige Copolymerisatlösungen herstellt. Die Lösungen können nach der Copolymerisation auf einen pH-Wert im Bereich von 6,5 bis 7 eingestellt werden, sofern nicht die Polymerisation ohnehin in diesem Bereich durchgeführt wurde. Die Copolymerisate können durch Eindampfen der wäßrigen Lösungen gewonnen werden. Sie haben einen niedrigen Restmonomerengehalt und sind überraschenderweise biologisch abbaubar. Die biologische Abbaubarkeit der erfindungsgemäßen Copolymerisate beträgt nach DIN 38 412, Teil 24, Statischer Test (L25) bis zu 100 %, und liegt in der Regel zwischen 20 und 95 %.

Die Copolymerisate sind wasserlöslich. Falls sie sich in der freien Säureform nicht in Wasser lösen, so gelingt es, sie durch partielle oder vollständige Neutralisation mit NaOH, KOH, Ammoniak oder Aminen in eine wasserlösliche Form zu überführen. Copolymerisate, deren Alkali- oder Ammoniumsalze, von denen sich mindestens 20 g pro Liter Wasser bei einer Temperatur von 20°C lösen, werden im vorliegenden Zusammenhang als wasserlöslich bezeichnet. Die Copolymerisate haben überraschenderweise den Vorteil, daß sie im Bereich geringer Polymerkonzentrationen keine Ausfällungen in Ca- und/oder Mg-Ionen enthaltenden wäßrigen Lösungen zeigen. Daher kann man stabile Lösungen der Copolymerisate im Trinkwasser herstellen, ohne daß es zu Ausfällungen der Erdalkalisalze der Copolymerisate kommt.

Die Copolymerisate enthalten Polymersegmente aus Einheiten der Monomeren a) und b) sowie gegebenenfalls c) und d) mit einem Molekulargewicht (Gewichtsmittel) bis zu 15.000, vorzugsweise 300 bis 8.000. Diese Polymersegmente können analytisch z.B. dadurch nachgewiesen werden, daß man die Copolymerisate einer vier- bis sechsstündigen Hydrolyse im alkalischen pH-Bereich, z.B. bei pH-Werten von 9 bis 14, und Temperaturen bis zu 100°C in wäßrigem Medium unterwirft. Nach der Hydrolyse werden die Reaktionsprodukte durch Zugabe von organischen, mit Wasser mischbaren Lösungsmitteln, wie Methanol, Aceton, Isopropanol oder Mischungen aus Methanol und Aceton aus der wäßrigen Lösung gefällt. Das ausgefällte Produkt wird mit einem Lösemittel (Methanol oder Aceton) nachgewaschen und anschließend getrocknet. Die Bestimmung der molaren Massen der Hydrolyseprodukte erfolgte durch Gel-Permeations-Chromatographie (= GPC) mit wäßrigen Elutionsmitteln. Die Eichung der Trennsäulen erfolgte mit eng verteilten Polystyrolsulfonaten der Fa. Pressure Chem. Comp. und Umrechnung auf die molaren Masseneinheiten von Na-Polyacrylat nach dem universellen Eichprinzip von Benoit (J. Chim. Phys. 63, (1966) 1507) unter Verwendung der Meßdaten von Spatorico und Beyer J. Appl. Polym. Sci. 19 (1975) 2933).

Die Copolymerisate werden als Beschichtungsmittel für Saatgut verwendet. Mit Hilfe der Saatgutbeschichtung - hier können sämtliche Getreidearten wie Weizen, Roggen, Hafer und Gerste sowie Mais und Lupinen sowie andere Saatgüter mit einem Polymerfilm umhüllt werden - wird bei der Aussaat ein schnelleres Keimen des beschichteten Saatguts gegenüber dem nichtbeschichteten Saatgut erreicht. Pro 100 kg Saatgut verwendet man 0,1 bis 1 kg, vorzugsweise 0,15 bis 0,25 kg, der Copolymerisate. Die Copolymerisate werden vorzugsweise in Form einer verdünnten wäßrigen Lösung auf das Saatgut gesprüht und bilden dort einen schützenden Polymerfilm. In den Polymerfilm können feinteilige, inerte Füllstoffe, z.B. Graphit, Quarz, Talkum oder Bentonit einer Teilchengröße von 20 bis 500 μm eingelagert sein. Die Füllstoffe werden vorzugsweise zusammen mit der Polymerlösung auf das zu beschichtende Material aufgetragen.

Die in den Beispielen angegebenen K-Werte wurden nach H. Fikentscher, Cellulosechemie, Band 13, 58-64 und 71-74 (1932) bestimmt, dabei bedeutet K = k•$10^3$. Die Messungen wurden am Natriumsalz in wäßriger Lösung bei 25°C, einem pH-Wert von 7 und einer Polymerkonzentration des Na-Salzes von 1 Gew.% vorgenommen. Sofern erfindungsgemäße Copolymerisate in Form anderer Salze oder der freien Säuren anfallen, müssen sie vor der Bestimmung des K-Wertes zunächst in die Na-Salze umgewandelt werden. Die in den Beispielen angegebenen Molekulargewichte beziehen sich auf das Zahlenmittel des Molekulargewichts. Die Werte für die biologische Abbaubarkeit wurden nach DIN 38 142, Teil 24, bestimmt.

Beispiele 1 bis 11

Allgemeine Herstellvorschrift

In einem 2 l-fassenden Glasreaktor, der mit Rührer, Thermometer, Stickstoffeinleitung und vier Zulaufgefäßen ausgestattet ist, von denen ein Zulaufgefäß beheizbar und mit Rührer versehen ist, werden jeweils die in Tabelle 1 angegebenen Mengen an Maleinsäureanhydrid sowie gegebenenfalls die ebenfalls in Tabelle 1 angegebenen Mengen an Regler, bezogen auf die Gesamtmenge der eingesetzten Monomeren, in 150 ml Wasser gelöst und auf 90°C erwärmt. Dabei wird das Maleinsäureanhydrid in Maleinsäure überführt. Gleichzeitig werden in dem beheizbaren Zulaufgefäß jeweils 0,5 Mol Methacrylsäureanhydrid und die ebenfalls jeweils in Tabelle 1 angegebenen Mengen an mehrwertigen Alkoholen sowie 0,1 g p-Toluolsulfonsäure bei 100°C innerhalb von 2 Stunden zu dem Comonomer der Komponente e) umgesetzt, das jeweils mindestens zwei ethylenisch ungesättigte Doppelbindungen enthält.

Zur Polymerisation werden dann die in der Tabelle jeweils angegebenen Mengen an Acrylsäure und die äquimolare Menge an 25 %iger wäßriger Natronlauge sowie die Schmelze des Comonomer e) aus dem beheizbaren Zulaufgefäß über einen Zeitraum von 5 Stunden und gleichbeginnend über einen Zeitraum von 6 Stunden die in Tabelle 1 angegebenen Mengen an Initiator, gelöst in 100 ml Wasser bei 90°C unter Stickstoffspülung, zugetropft. In der Tabelle 1 sind die Mengen der Einsatzstoffe in Mol sowie die Monomerenzusammensetzung, die der Copolymerisation unterworfen wird, in Molprozent angegeben. Die Mengen an Regler und Initiatoren, die in der Tabelle angegeben sind, sind Gewichtsprozente, bezogen auf die eingesetzten Monomeren. Bei der Polymerisation erhält man eine viskose Lösung, die 2 Stunden nach Beendigung der Copolymerisation noch einer Nachpolymerisation bei 95°C unterworfen und anschließend nach dem Abkühlen auf etwa 30°C mit 25 %iger wäßriger Natronlauge auf einen pH-Wert von 6,5 eingestellt wird. In Tabelle 1 sind die jeweils erhaltenen K-Werte der Copolymerisate, der Restmonomerengehalt an Maleinsäure sowie die Werte für die biologische Abbaubarkeit der Produkte angegeben.

Die biologische Abbaubarkeit der Copolymerisate wurde zusätzlich durch Bakterienwachstumsversuche nachgewiesen. Hierfür wurde auf festen Nährböden ein Anreicherungsmedium hergestellt und mit 18 g/l Agar verfestigt. Das Anreicherungsmedium hatte folgende Zusammensetzung:

Dinatriumhydrogenphosphat mit 2 Wasser      7,0 g/l

Kaliumdihydrogenphosphat      3,0 g/l

Natriumchlorid      0,5 g/l

Ammoniumchlorid      1,0 g/l

Lösung von Spurenelementen      2,5 ml/l pH 7.0

(hergestellt nach T. Bauchop und S.R. Elsden, J. gen. Microbiol. 23, 457-469 (1960)).

Die in Tabelle 1 unter Nr. 2, 4, 6, 8 und 9 beschriebenen $\overline{\text{C}}$opolymerisate wurden dem Nährmedium

jeweils in Konzentrationen von 10 g/l zugegeben.

Erdproben wurden entweder in Flüssigmedium gegeben und dort 7 Tage bei 30°C geschüttelt oder als wäßrige Suspension direkt auf feste Nährböden gebracht und ebenfalls bei 30°C inkubiert. Die Anreichungskulturen in Flüssigmedium wurden nach 7 Tagen auf feste Nährböden übertragen. Von diesen Platten wurden gut wachsende Kolonien abgeimpft und im Vereinzelungsausstrich auf Einheitlichkeit geprüft.

Auf diese Weise wurden Bakterienreinkulturen isoliert, die auf den untersuchten Copolymerisaten eindeutig Wachstum zeigten.

Wurden dagegen die oben beschriebenen Bakterienversuche zum Vergleich mit einem Copolymerisat aus 30 Gew.% Maleinsäure und 70 Gew.% Acrylsäure vom K-Wert 60 durchgeführt, so konnte kein Bakterienwachstum nachgewiesen werden.

Tabelle 1

| Bei- spiel Nr. | Herstellung des Comonomeren im Zulaufgefäß aus 0,5 Mol MASA + ... Mol mehrwertiger Alkohol | Einsatzstoffe bei der Copolymerisation | | | | | | | | Hydroxyl- ammonium- sulfat als Regler [Gew%] | Wasser- stoff- peroxid als Initiator [Gew%] | Copolymerisat | | |
|---|---|---|---|---|---|---|---|---|---|---|---|---|---|---|
| | | Comono- mer e) | | Meth- acryl- säure | | Acryl- säure | | MSA (hydro- lysiert zu MS) | | | | K-Wert | Rest- gehalt an MS [Gew%] | Biolo- gische Abbau- barkeit [Gew%] |
| | | Mol | Mol% | Mol | Mol% | Mol | Mol% | Mol | Mol% | | | | | |
| 1 | 0,25 Ethylenglykol | 0,25 | 5,3 | 0,5 | 10,5 | 3 | 63,2 | 1 | 21,0 | 2,5 | 6 | 52,7 | 0,24 | 43 |
| 2 | 0,25 Ethylenglykol | 0,25 | 5,3 | 0,5 | 10,5 | 2,5 | 52,6 | 1,5 | 31,6 | - | 6 | 40,8 | 0,19 | 48 |
| 3 | 0,17 Glycerin | 0,17 | 3,6 | 0,5 | 10,7 | 3 | 64,3 | 1 | 21,4 | - | 5 | 48,2 | 0,23 | 56 |
| 4 | 0,17 Glycerin | 0,17 | 3,6 | 0,5 | 10,7 | 3,5 | 74,9 | 0,5 | 10,7 | 2,5 | 5 | 28,1 | 0,27 | 63 |
| 5 | 0,17 Glycerin | 0,17 | 3,6 | 0,5 | 10,7 | 2,5 | 53,5 | 1,5 | 32,1 | - | 5 | 40,7 | 0,21 | 39 |
| 6 | 0,25 Neopentylglykol | 0,25 | 5,3 | 0,5 | 10,5 | 3,5 | 73,7 | 0,5 | 10,5 | 2,5 | 5 | 25,8 | 0,23 | 47 |
| 7 | 0,25 Neopentylglykol | 0,25 | 5,3 | 0,5 | 10,5 | 2,5 | 52,6 | 1,5 | 31,6 | - | 5 | 44,4 | 0,28 | 51 |
| 8 | 0,25 Polyethylen- glykol vom Molekular- gewicht 400 | 0,25 | 5,3 | 0,5 | 10,5 | 3,5 | 73,7 | 0,5 | 10,5 | 2,5 | 5 | 41,8 | 0,31 | 57 |
| 9 | 0,25 Polyethylen- glykol vom Molekular- wicht 400 | 0,25 | 5,3 | 0,5 | 10,5 | 2,5 | 52,6 | 1,5 | 31,6 | - | 5 | 44,4 | 0,34 | 74 |
| 10 | 0,125 Pentaerythrit | 0,125 | 2,7 | 0,5 | 10,8 | 2,5 | 54,1 | 1,5 | 32,4 | - | 5 | 53,2 | 0,27 | 68 |
| 11 | 0,125 Pentaerythrit | 0,125 | 3,4 | 0,5 | 13,8 | 1,5 | 41,4 | 1,5 | 41,4 | - | 5 | 43,2 | 0,35 | 71 |

Für die unter Nr. 1, 2, 8 und 9 in Tabelle 1 angegebenen Copolymerisate wurde das Ausfällverhalten bei pH 7,5 in wäßrigen Lösungen geprüft, die 10 bis 10 000 mg/l Ca-Ionen (in Form von $CaCl_2$) enthielten. Folgende Ca-Inonenkonzentrationen wurden getestet: 10, 50, 75, 100, 150, 500, 1.000 und 10.000 mg/l. Die Copolymerisatkonzentrationen wurden von 0,1 bis 7 mg/l variiert (geprüft wurden folgende Konzentrationen: 0,1; 0,5; 1,0; 2; 3; 4 und 7 mg Copolymerisat/l Wasser).

Dabei traten selbst nach 20 tägiger Lagerung der wäßrigen Lösungen der Copolymerisate in Gegenwart von Ca-Ionen keine Ausfällungen auf, während ein Copolymerisat aus 30 Gew.% Maleinsäure und 70 Gew.% Acryläsure vom K-Wert 60 unter den angegebenen Prüfbedingungen immer Ausfällungen ergab.

Beispiele 12 bis 17

Allgemeine Herstellvorschrift

In einem mit Rührer, Thermometer, 4 Zulaufgefäßen und Inertgaszuleitung versehenen 2 l Glasreaktor werden n Mol Monomer b) in 150 ml Wasser gelöst und auf 90 bis 95°C erwärmt. Gleichbeginnend werden p Mol Monomer e), gelöst in q Mol Monomer a), die dem Monomer a) äquivalente Menge 25 % Natronlauge sowie gegebenenfalls m Gew.% Regler als 20 %ige Lösung in Wasser innerhalb 4 h unter Inertgas zudosiert; ebenso werden 5 Gew.% Wasserstoffperoxid als 10 %ige Lösung in Wasser innerhalb 5 h zugegeben. Die viskose Lösung wird 2 h nachpolymerisiert und mit 25 %iger Natronlauge auf einen pH-Wert von 6,5 gestellt.

Tabelle 2

| Beispiel Nr. | Monomer a) AS q Mol)/ [Mol%] | Monomer b) MSA n(Mol)/ [Mol%] | Monomer e) p(Mol)/ [Mol%] | Regler m [Gew.%] | K-Wert | Restgehalt Monomer b) [%] | Biologische Abbaubarkeit [%] |
|---|---|---|---|---|---|---|---|
| 12 | 1,85/77,1 | 0,55/20,8 | Diethylenglykol-diacrylat 0,050/2,1 | - | 57,3 | 0,26 | 39 |
| 13 | 1,75/73,7 | 0,5/21,0 | Diethylenglykol-diacrylat 0,12/5,3 | ME 6 | 54,0 | 0,52 | 62 |
| 14 | 1,85/77,1 | 0,55/20,8 | PE 400-di-acrylat 0,050/2,1 | - | 47,5 | 0,29 | 33 |
| 15 | 1,80/75,0 | 0,5/20,8 | PE 400-di-acrylat 0,10/4,2 | ME 10 | 59,9 | 0,40 | 74 |
| 16 | 1,91/77,9 | 0,5/20,4 | Pentaerythrit-triacrylat 0,042/1,7 | - | 49,0 | 0,21 | 38 |
| 17 | 1,69/74,8 | 0,5/22,1 | Pentaerythrit-triacrylat 0,068/3,0 | ME 10 | 42,7 | 0,41 | 54 |

Verwendete Abkürzungen

AS = Acrylsäure
MSA = Maleinsäureanhydrid
ME = Mercaptoethanol
PE 400 = Polyethylenglykol vom Molekulargewicht 400

**Patentansprüche**

1. Wasserlösliche Copolymerisate auf Basis von monoethylenisch ungesättigten Carbonsäuren mit 3 bis 6 C-Atomen, dadurch gekennzeichnet, daß die Copolymerisate einen K-Wert von 8 bis 100 (bestimmt am Na-Salz nach H. Fikentscher in wäßriger Lösung bei 25° C, einem pH-Wert von 7 und einer Polymerkonzentration des Na-Salzes von 1 Gew.%) haben und

a) 99 bis 15 Mol% wenigstens einer monoethylenisch ungesättigten $C_3$- bis $C_6$-Monocarbonsäure,

b) 0,5 bis 84,5 Mol% wenigstens einer monoethylenisch ungesättigten $C_4$- bis $C_6$-Dicarbonsäure,

c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,

d) 0 bis 30 Mol% anderen, mit a), b) und c) copolymerisierbaren, wasserlöslichen, monoethylenisch ungesättigten Monomeren und

e) 0,5 bis 15 Mol% wenigstens eines mindestens zwei ethylenisch ungesättigte, nicht konjugierte Doppelbindungen aufweisenden Comonomeren, das sich von Estern ableitet, die erhältlich sind durch Veresterung von

e1) monoethylenisch ungesättigten $C_3$- bis $C_6$-Monocarbonsäuren mit

e2) mehrwertigen, 2 bis 6 C-Atome aufweisenden Alkoholen, wasserlöslichen oder wasserunlöslichen Polyalkylenglykolen eines Molekulargewichtes bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000 und einwertigen, monoethylenisch ungesättigten $C_3$- bis $C_6$-Alkoholen

mit der Maßgabe einpolymerisiert enthalten, daß die Summe der Angaben in Mol% a) bis e) immer 100 beträgt und daß die über Einheiten von e) miteinander verknüpften Polymersegmente aus Einheiten der Monomeren a) und b) sowie gegebenenfalls c) und d) Polymersegmente mit einem Molekulargewicht (Gewichtsmittel) von höchstens 15.000 darstellen.

2. Wasserlösliche Copolymerisate nach Anspruch 1, dadurch gekennzeichnet, daß das einpolymerisierte Comonomer (e) erhältlich ist durch Umsetzung von

e1) Acrylsäure, Methacrylsäure, Crotonsäure, Vinylessigsäure, Methacrylsäureanhydrid oder deren Gemischen mit

e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000, Allylalkohol oder deren Mischungen.

3. Wasserlösliche Copolymerisate nach den Ansprüchen 1 oder 2, dadurch gekennzeichnet, daß die über Einheiten von e) miteinander verknüpften Polymersegmente aus Einheiten der Monomeren a) und b) sowie gegebenenfalls c) und d) Polymersegmente mit einem Molekulargewicht (Gewichtsmittel) von 300 bis 8.000 darstellen.

4. Verfahren zur Herstellung von wasserlöslichen Copolymerisaten nach einem der Ansprüche 1 bis 3 durch Copolymerisieren von Monomergemischen aus

a) 99 bis 15 Mol% einer monoethylenisch ungesättigten $C_3$- bis $C_6$-Monocarbonsäure,

b) 0,5 bis 84,5 Mol% einer monoethylenisch ungesättigten $C_4$- bis $C_6$-Dicarbonsäure,

c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,

d) 0 bis 30 Mol% anderen, mit a), b) und c) copolymerisierbaren, wasserlöslichen, monoethylenisch ungesättigten Monomeren

in wäßriger Lösung in Gegenwart von Polymerisationsinitiatoren, dadurch gekennzeichnet, daß die Copolymerisation in Anwesenheit von

e) 0,5 bis 15 Mol% wenigstens eines mindestens zwei ethylenisch ungesättigte, nicht konjugierte Doppelbindungen aufweisenden Comonomeren, das sich von Estern ableitet, die erhältlich sind durch Veresterung von

e1) monoethylenisch ungesättigten $C_3$- bis $C_6$-Monocarbonsäuren mit

e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykly-

kolen eines Molekulargewichts über etwa 400 bis 10.000, Polyglycerinen eines Molekulargewichts bis 2.000, Polyvinylalkohol eines Molekulargewichts bis 10.000 und einwertigen, monoethylenisch ungesättigten $C_3$- bis $C_6$-Alkoholen

mit der Maßgabe durchgeführt wird, daß die Summe der Angaben in Mol.% a) bis e) immer 100 beträgt und daß dabei noch zusätzlich Polymerisationsregler in einer Menge von 0,2 bis 25 Gew.%, bezogen auf die Monomeren a) bis e), eingesetzt werden, wobei auf den Einsatz von Polymerisationsreglern verzichtet werden kann, wenn die Menge an Polymerisationsinitiatoren 4 Gew.%, bezogen auf die Monomeren a) bis e), übersteigt.

5. Verfahren nach Anspruch 4, dadurch gekennzeichnet, daß man zunächst das Comonomer (e) herstellt durch Umsetzung von

e1) Methacrylsäureanhydrid mit
e2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyvinylalkohol eines Molekulargewichts bis 10.000, Allylalkohol, Buten-2-diol-1,4 oder deren Mischungen

bei Temperaturen von 50 bis 200 °C und es dann in wäßriger Lösung mit den Monomeren a) bis d) bei Temperaturen bis 200 °C copolymerisiert.

6. Verfahren nach den Ansprüchen 4 oder 5, dadurch gekennzeichnet, daß das Comonomer (e) in einer monoethylenisch ungesättigten Carbonsäure gemäß (a) oder einer gegebenenfalls teilweise oder vollständig neutralisierten wäßrigen Lösung derselben gelöst und in Form dieser Lösung der Copolymerisation mit den übrigen Comonomeren unterworfen wird.

7. Verfahren nach mindestens einem der Ansprüche 4 bis 6, dadurch gekennzeichnet, daß man Monomergemische aus

a) Acrylsäure und/oder Methacrylsäure und
b) Maleinsäure und/oder Itaconsäure mit
e) einem Comonomer aus
   e1) Acrylsäure, Methacrylsäure oder deren Gemischen und
   e2) Ethylenglykol, Polyethylenglykol eines Molekulargewichts bis 2.000, Glycerin, Polyglycerinen eines Molekulargewichts bis 2.000, Pentaerythrit, Monosacchariden, Neopentylglykol

der Copolymerisation unterwirft.

8. Verfahren nach mindestens einem der Ansprüche 4 bis 6, dadurch gekennzeichnet, daß man Monomergemische aus

a) 99 bis 15 Mol% Acrylsäure und/oder Methacrylsäure und
b) 0,5 bis 84,5 Mol% Maleinsäure und/oder Itaconsäure und
c) 0 bis 20 Mol% Hydroxypropylacrylaten, Hydroxypropylmethacrylaten, Hydroxyethylacrylat, Hydroxyethylmethacrylat, Hydroxybutylacrylaten, Hydroxybutylmethacrylaten oder deren Mischungen und
e) 0,5 bis 15 Mol% eines Comonomers aus
   e1) Acrylsäure, Methacrylsäure oder deren Gemischen und
   e2) Ethylenglykol, Polyethylenglykol eines Molekulargewichts bis 2.000, Glycerin, Polyglycerinen eines Molekulargewichts bis 2.000, Pentaerythrit, Allylalkohol oder deren Mischungen

der Copolymerisation unterwirft.

9. Verfahren nach mindestens einem der Ansprüche 4 bis 8, dadurch gekennzeichnet, daß der pH-Wert der wäßrigen Lösung während der Copolymerisation 2 bis 9 beträgt und daß als Regler Aldehyde mit 1 bis 4 C-Atomen, Ameisensäure, Ammoniumformiat, Hydroxylammoniumsalze und/oder wasserlösliche, SH-Gruppen enthaltende Verbindungen in einer Menge bis zu 15 Gew.%, bezogen auf die Monomeren a) bis e), eingesetzt werden.

**10.** Verfahren nach den Ansprüchen 4 bis 9, dadurch gekennzeichnet, daß die Monomeren a) und b) jeweils in partiell mit Alkalimetall- oder Ammoniumbasen neutralisierter Form copolymerisiert werden, wobei der Neutralisationsgrad 40 bis 90 Mol% beträgt.

**11.** Verwendung der wasserlöslichen Copolymerisate nach Anspruch 1 als Beschichtungsmittel für Saatgut.

## Claims

**1.** A water-soluble copolymer based on monoethylenically unsaturated carboxylic acids of 3 to 6 carbon atoms, wherein the copolymer has a K value of from 8 to 100 (determined on the Na salt according to H. Fikentscher in aqueous solution at 25°C, a pH of 7 and a polymer concentration of the Ha salt of 1% by weight) and contains, as copolymerized units,

a) from 99 to 15 mol % of one or more monoethylenically unsaturated $C_3$-$C_6$-monocarboxylic acids,

b) from 0.5 to 84.5 mol % of one or more monoethylenically unsaturated $C_4$-$C_6$-dicarboxylic acids,

c) from 0 to 20 mol % of one or more hydroxyalkyl esters, where hydroxyalkyl is of 2 to 6 carbon atoms, of monoethylenically unsaturated $C_3$-$C_6$-carboxylic acids,

d) from 0 to 30 mol % of other water-soluble, monoethylenically unsaturated monomers which are copolymerizable with a), b) and c) and

e) from 0.5 to 15 mol % of one or more comonomers which contain two or more ethylenically unsaturated, nonconjugated double bonds and are derived from esters which are obtainable by esterifying

e1) monoethylenically unsaturated $C_3$-$C_6$-monocarboxylic acids with

e2) polyhydric alcohols of 2 to 6 carbon atoms, water-soluble or water-insoluble polyalkylene glycols having a molecular weight of up to about 400, water-soluble polyalkylene glycols having a molecular weight of from above about 400 to 10,000 polyglycerols having a molecular weight of up to 2,000, polyvinyl alcohol having a molecular weight of up to 10,000 and monohydric, monoethylenically unsaturated $C_3$-$C_6$-alcohols,

with the proviso that the sum of the mol % a) to e) is always 100, and the polymer segments which consist of units of the monomers a) and b) and, if required, c) and d) and are bonded to one another via units of e) are polymer segments having a weight average molecular weight of not more than 15,000.

**2.** A water-soluble copolymer as claimed in claim 1, wherein the copolymerized comonomer (e) is obtainable by reacting

e1) acrylic acid, methacrylic acid, crotonic acid, vinyl-acetic acid or methacrylic anhydride, or a mixture of these, with

e2) polyhydric alcohols of 2 to 6 carbon atoms, water-soluble or water-insoluble polyalkylene glycols having a molecular weight of up to about 400, water-soluble polyalkylene glycols having a molecular weight of from above about 400 to 10,000, polyglycerols having a molecular weight of up to 2,000, polyvinyl alcohol having a molecular weight of up to 10,000 or allyl alcohol or a mixture of these.

**3.** A water-soluble copolymer as claimed in claim 1 or 2, wherein the polymer segments which consist of units of the monomers a) and b) and, if required, c) and d) and are bonded to one another via units of e) are polymer segments having a weight average molecular weight of from 300 to 8,000.

**4.** A process for the preparation of a water-soluble copolymer as claimed in any of claims 1 to 3 by copolymerization of a monomer mixture of

a) from 99 to 15 mol % of a monoethylenically unsaturated $C_3$-$C_6$-monocarboxylic acid,

b) from 0.5 to 84.5 mol % of one or more monoethylenically unsaturated $C_4$-$C_6$-dicarboxylic acids,

c) from 0 to 20 mol % of one or more hydroxyalkyl esters, where hydroxyalkyl is of 2 to 6 carbon atoms, of monoethylenically unsaturated $C_3$-$C_6$-carboxylic acids,

d) from 0 to 30 mol % of other water-soluble, monoethylenically unsaturated monomers which are copolymerizable with a), b) and c) in aqueous solution in the presence of a polymerization initiator, which comprises copolymerization in the presence of

e) from 0.5 to 15 mol % of one or more comonomers which possess two or more ethylenically unsaturated, nonconjugated double bonds and are derived from esters which are obtainable by esterifying

e1) monoethylenically unsaturated $C_3$-$C_6$-monocarboxylic acids with

e2) polyhydric alcohols of 2 to 6 carbon atoms, water-soluble or water-insoluble polyalkylene glycols having a molecular weight of up to about 400, water-soluble polyalkylene glycols having a molecular weight of from above about 400 to 10,000, polyglycerols having a molecular weight of up to 2,000, polyvinyl alcohol having a molecular weight of up to 10,000 or monohydric, monoethylenically unsaturated $C_3$-$C_6$-alcohols,

with the proviso that the sum of the mol % a) to e) is always 100, and, in addition, a polymerization regulator is used in an amount of 0.2 to 25% by weight, based on the monomers a) to e), and the use of polymerization regulators may be dispensed with if the amount of polymerization initiators exceeds 4% by weight, based on the monomers a) to e).

5. A process as claimed in claim 4, wherein the comonomer (e) is first prepared by reacting

e1) methacrylic anhydride with

e2) polyhydric alcohols of 2 to 6 carbon atoms, water-soluble or water-insoluble polyalkylene glycols having a molecular weight of up to about 400, water-soluble polyalkylene glycols having a molecular weight of from above about 400 to 10,000, polyglycerols having a molecular weight of up to 2,000, polyvinyl alcohol having a molecular weight of up to 10,000, allyl alcohol or but-2-ene-1,4-diol or a mixture of these

at from 50 to 200°C, and then copolymerizing the said comonomer in aqueous solution with the monomers a) to d) at not more than 200°C.

6. A process as claimed in claim 4 or 5, wherein the comonomer e) is dissolved in a monoethylenically unsaturated carboxylic acid (a) or in a partially or completely neutralized aqueous solution of the said acid and, in the form of this solution, is subjected to the copolymerization with the other comonomers.

7. A process as claimed in one or more of claims 4 to 6, wherein a monomer mixture of

a) acrylic acid and/or methacrylic acid and

b) maleic acid and/or itaconic acid with

e) a comonomer of

e1) acrylic acid, methacrylic acid or a mixture of these and

e2) ethylene glycol, polyethylene glycol having a molecular weight of up to 2,000, glycerol, polyglycerols having a molecular weight of up to 2,000, pentaerythritol, monosaccharides or neopentylglycol

is subjected to the copolymerization.

8. A process as claimed in one or more of claims 4 to 6, wherein a monomer mixture of

a) from 99 to 15 mol % of acrylic acid and/or methacrylic acid and

b) from 0.5 to 84.5 mol % of maleic acid and/or itaconic acid and

c) from 0 to 20 mol % of hydroxypropyl acrylates, hydroxypropyl methacrylates, hydroxyethyl acrylate, hydroxyethyl methacrylate, hydroxybutyl acrylates or hydroxybutyl methacrylates or a mixture of these, and

e) from 0.5 to 15 mol % of a comonomer of

e1) acrylic acid, methacrylic acid or a mixture of these and

e2) ethylene glycol, polyethylene glycol having a molecular weight of up to 2,000, glycerol, polyglycerols having a molecular weight of up to 2,000, pentaerythritol or allyl alcohol or a mixture of these

is subjected to the copolymerization.

9. A process as claimed in one or more of claims 4 to 8, wherein the pH of the aqueous solution during the copolymerization is from 2 to 9, and an aldehyde of 1 to 4 carbon atoms, formic acid, ammonium formate, a hydroxylammonium salt and/or an SH-containing water-soluble compound are used as regulators, in an amount of not more than 15% by weight, based on the monomers a) to e).

10. A process as claimed in claims 4 to 9, wherein the monomers a) and b) are each copolymerized in a form partially neutralized with an alkali metal or ammonium base, the degree of neutralization being from 40 to 90 mol %.

**11.** Use of a water-soluble copolymer as claimed in claim 1 as a coating agent for seed.

**Revendications**

**1.** Copolymères solubles dans l'eau à base d'acides carboxyliques à insaturation monoéthylénique, qui comportent de 3 à 6 atomes de carbone, caractérisés en ce que les copolymères possèdent une valeur K de 8 à 100 (déterminée sur le sel de sodium selon H. Fikentscher en solution aqueuse et à 25°C, une valeur de pH de 7 et une concentration en polymère du sel de sodium de 1% en poids) et contiennent, incorporés par polymérisation,

a) 99 à 15% molaires d'au moins un acide monocarboxylique en $C_3$ à $C_6$ à insaturation éthylénique,
b) 0,5 à 84,5% molaires d'au moins un acide dicarboxylique en $C_4$ à $C_6$ à insaturation monométhylénique,
c) 0 à 20% molaires d'un ou plusieurs esters - hydroxyalkyliques, dont le radical hydroxyalkyle comporte de 2 à 6 atomes de carbone, d'acides carboxyliques en $C_3$ à $C_6$ à insaturation monoéthylénique,
d) 0 à 30% molaires d'autres monomères à insaturation monoéthylénique, solubles dans l'eau, copolymérisables avec a), b) et c) et
e) 0,5 à 15% molaires d'au moins un comonomère qui présente au moins deux doubles liaisons éthyléniquement insaturées, non conjuguées, qui provient d'esters que l'on peut obtenir par l'estérification
e1) d'acides monocarboxyliques en $C_3$ à $C_6$ à insaturation monoéthylénique avec
e2) des alcools polyhydroxylés, comportant de 2 à 6 atomes de carbone, des polyalkylèneglycols solubles dans l'eau ou insolubles dans l'eau, d'une masse moléculaire allant jusqu'à environ 400, despolyalkylèneglycols solubles dans l'eau d'une masse moléculaire supérieure à environ 400 et allant jusqu'à 10.000, des polyglycérines d'une masse moléculaire allant jusqu'à 2.000, d'alcool polyvinylique d'une masse moléculaire allant jusqu'à 10.000 et d'alcools en $C_3$ à $C_6$ à insaturation monoéthylénique, monohydroxylés,

avec la condition que la somme des pourcentages molaires de a) à e) soit toujours égale à 100 et que les segments polymériques mutuellement liés par l'intermédiaire d'unités de e), constitués d'unités des monomères a) et b) comme éventuellement aussi c) et d), représentent des segments polymériques avec une masse moléculaire (moyenne en poids) d'au maximum 15.000.

**2.** Copolymères solubles dans l'eau selon la revendication 1, caractérisés en ce que le comonomère incorporé par polymérisation (e) peut s'obtenir par la réaction de
e1) d'acide acrylique, d'acide méthacrylique, d'acide crotonique, d'acide vinylacétique, d'anhydride méthacrylique ou leurs mélanges, avec
e2) des alcools polyhydroxylés, comportant de 2 à 6 atomes de carbone, des polyalkylèneglycols solubles dans l'eau ou insolubles dans l'eau, d'une masse moléculaire allant jusqu'à environ 400, despolyalkylèneglycols solubles dans l'eau d'une masse moléculaire supérieure à environ 400 et allant jusqu'à 10.000, des polyglycérines d'une masse moléculaire allant jusqu'à 2.000, d'alcool polyvinylique d'une masse moléculaire allant jusqu'à 10.000, d'alcool allylique, ou de leurs mélanges.

**3.** Copolymères solubles dans l'eau selon la revendication 1 ou 2, caractérisés en ce que les segments polymériques mutuellement liés par l'intermédiaire d'unités de e), constitués d'unités des monomères a) et b), comme éventuellement aussi c) et d), représentent des segments polymériques d'une masse moléculaire (moyenne en poids) de 300 à 8.000.

**4.** Procédé de préparation de copolymères solubles dans l'eau selon l'une quelconque des revendications 1 à 3, par la copolymérisation de mélanges de monomères constitués de

a) 99 à 15% molaires d'au moins un acide monocarboxylique en $C_3$ à $C_6$ à insaturation éthylénique,
b) 0,5 à 84,5% molaires d'au moins un acide dicarboxylique en $C_4$ à $C_6$ à insaturation monométhylénique,
c) 0 à 20% molaires d'un ou plusieurs esters - hydroxyalkyliques, dont le radical hydroxyalkyle comporte de 2 à 6 atomes de carbone, d'acides carboxyliques en $C_3$ à $C_6$ à insaturation

EP 0 290 807 B1

monoéthylénique,

d) 0 à 30% molaires d'autres monomères à insaturation monoéthylénique, solubles dans l'eau, copolymérisables avec a), b) et c), en solution aqueuse et en présence d'amorceurs de polymérisation,

caractérisé en ce que l'on entreprend la réaction en présence de

e) 0,5 à 15% molaires d'au moins un comonomère qui présente au moins deux doubles liaisons ethyléniquement insaturées, non conjuguées, qui provient d'esters que l'on peut obtenir par l'estérification

e1) d'acides monocarboxyliques en $C_3$ à $C_6$ à insaturation monoéthylénique avec

e2) des alcools polyhydroxylés, comportant de 2 à 6 atomes de carbone, des polyalkylèneglycols solubles dans l'eau ou insolubles dans l'eau, d'une masse moléculaire allant jusqu'à environ 400, des polyalkylèneglycols solubles dans l'eau d'une masse moléculaire supérieure à environ 400 et allant jusqu'à 10.000, des polyglycérines d'une masse moléculaire allant jusqu'à 2.000, d'alcool polyvinylique d'une masse moléculaire allant jusqu'à 10.000 et d'alcools en $C_3$ à $C_6$ à insaturation monoéthylénique, monohydroxylés,

avec la condition que la somme des pourcentages molaires de a) à e) soit toujours égale à 100 et en ce que l'on met complémentairement encore en oeuvre des régulateurs de polymérisation en une proportion de 0,2 à 25% en poids, par rapport aux monomères a) à e), mais où on peut renoncer à la mise en oeuvre de régulateurs de polymérisation lorsque la proportion en amorceurs de polymérisation dépasse 4% en poids par rapport aux monomères a) à e).

5. Procédé suivant la revendication 4, caractérisé en ce que l'on prépare d'abord le comonomère (e) par la réaction

e1) d'anhydride méthacrylique avec

e2) des alcools polyhydroxylés, comportant de 2 à 6 atomes de carbone, des polyalkylèneglycols solubles dans l'eau ou insolubles d'une masse moléculaire allant jusqu'à environ 400, des polyalkylèneglycols solubles dans l'eau d'une masse moléculaire supérieure à environ 400 et allant jusqu'à 10.000, des polyglycérines d'une masse moléculaire allant jusqu'à 2.000, de l'alcool polyvinylique d'une masse moléculaire allant jusqu'à 10.000, de l'alcool allylique, du butène-2-diol-1,4, ou leurs mélanges,

à des températures de 50 à 200 ° C et en ce que l'on copolymérise ensuite les monomères a) à d) à des températures allant jusqu'à 200 ° C, en solution aqueuse.

6. Procédé suivant la revendication 4 ou 5, caractérisé en ce que l'on dissout le comonomère e) dans un acide carboxylique à insaturation monoéthylénique selon (a) ou dans une solution aqueuse de cet acide, éventuellement partiellement ou totalement neutralisée et on soumet le comonomère (e) sous la forme de cette solution à la copolymérisation avec les autres comonomères.

7. Procédé selon au moins l'une des revendications 4 à 6, caractérisé en ce que l'on soumet à la copolymérisation des mélanges de monomères constitués

a) d'acide acrylique et/ou d'acide méthacrylique et
b) d'acide maléique et/ou d'acide itaconique, avec
e) un comonomère constitué de
e1) d'acide acrylique, d'acide méthacrylique, ou de leurs mélanges et
e2) d'éthylèneglycol, de polyéthylèneglycol d'une masse moléculaire allant jusqu'à 2.000, de glycérine, de polyglycérines d'une masse moléculaire allant jusqu'à 2.000, de pentaérythrite, de monosaccharides, de néopentylglycol.

8. Procédé selon au moins l'une des revendications 4 à 6, caractérisé en ce que l'on soumet à la copolymérisation des mélanges de monomères constitués de

a) 99 à 15% molaires d'acide acrylique et/ou d'acide méthacrylique et
b) 0,5 à 84,5% molaires d'acide maléique et/ou d'acide itaconique et

17

c) 0 à 20% molaires d'acrylates d'hydroxypropyle, de méthacrylates d'hydroxypropyle, d'acrylate d'hydroxyéthyle, de méthacrylate d'hydroxyéthyle, d'acrylates d'hydroxybutyle, de méthacrylates d'hydroxybutyle ou de leurs mélanges et

e) 0 à 15% molaires d'un monomère constitué de

    e1) d'acide acrylique, d'acide méthacrylique, ou de leurs mélanges et

    e2) d'éthylèneglycol, de polyéthylèneglycol d'une masse moléculaire allant jusqu'à 2.000, de glycérine, de polyglycérines d'une masse moléculaire allant jusqu'à 2.000, de pentaérythrite, d'alcool allylique ou de leurs mélanges.

9. Procédé suivant au moins l'une des revendications 4 à 8, caractérisé en ce que la valeur du pH de la solution aqueuse varie de 2 à 9 au cours de la copolymérisation et en ce que l'on met en oeuvre, à titre de régulateurs, les aldéhydes comportant de 1 à 4 atomes de carbone, l'acide formique, le formiate d'ammonium, des sels d'hydroxylammonium et/ou des composés contenant des radicaux SH, solubles dans l'eau, en une proportion allant jusqu'à 15% en poids par rapport aux monomères a) à e).

10. Procédé suivant les revendications 4 à 9, caractérisé en ce que l'on copolymérise les monomères a) et b) à chaque fois sous une forme partiellement neutralisée avec des bases de métaux alcallins ou d'ammonium et le degré de neutralisation atteint 40 à 90% molaires.

11. Utilisation des copolyméres solubles dans l'eau selon la revendication à titre d'agents de revêtement ou d'enrobage de semences.